# EUROPEAN PATENT APPLICATION

(11) **EP 3 540 247 A1**
(43) Date of publication of application: **18.09.2019**
(21) Application number: 19164365.9
(22) Date of filing: 12.09.2014
(51) Int. Cl.: F16B 45/02

(54) **CARABINER WITH KEY-LOCK SYSTEM**

(30) Priority: 19.09.2013 IT MI20131544
(62) Divisional of application: 14184660.0
(71) Applicant: Camp S.p.A., 23834 Premana (Lecco) (IT)
(72) Inventor: CODEGA, Antonio, I-23834 Premana, LECCO (IT); GAI, Luca, I-23834 Premana, LECCO (IT)
(74) Representative: Croce, Valeria

(57) **Abstract**

The present invention relates to a carabiner, in particular a carabiner with locking system of the type called "key-lock", for mountaineering and climbing.

More particularly, the present invention relates to a carabiner (1) comprising a ring (2) having a side (3), interrupted by an opening delimited by a first and a second end (10, 12), wherein said opening is closed by a spring closing element (4) which can take an open position and a closed position, wherein the first end (10) of the ring (2) comprises a bulb-shaped coupling portion (13), with a projecting part in a direction transverse to the plane of the carabiner (1), characterised in that said coupling portion (13) on both sides of the bulb comprises a shoulder (14) having an uneven surface.

## Description

The present invention relates to a carabiner, in particular with a carabiner with closing system of the type called "key-lock", for mountaineering and climbing.

There are various types of carabiners for mountaineering and climbing. A first type are carabiners with ring nut, usable in particular for hooking the harness. Then, there are lever or wire carabiners which are normally used for quick draws. In all cases, the carabiners must be resistant to the opening, both accidental and when the carabiner is under load, such as occurs in case of fall. In fact, when the carabiner is under load, it tends to get deformed in space according to complex directions, with the risk of creating a non-optimal coupling between the mobile end of the closing element and the point of contact thereof with the coupling portion of the ring.

In order to obviate this drawback, carabiners are used which comprise a sort of hook that engages the end of the lever. While this solution is able to increase the safety of the climber, the hook can hinder the slipping of the rope, engaging therewith and therefore making the extraction from the carabiner difficult during some phases of the climb.

The so-called "key-lock" fixing system was then proposed, which consists in shaping the end of the coupling ring as a T according to a cross section with respect to the plane in which the carabiner lies. The lever will consequently have a coupling head of complementary shape, so as to achieve a shape coupling. This fastening system prevents the hook effect of conventional lever carabiners and ensures an acceptable level of safety against accidental opening, even if the risk of opening is still not averted.

The problem that underlies the present invention is to provide a carabiner of the lever type, in particular of the type provided with a "key-lock" system, which further improves the resistance to opening when the carabiner is under load.

This problem is solved by a carabiner as outlined in the appended claims, the definitions of which are an integral part of the present invention.

Further features and advantages of the present invention will appear more clearly from the description of a preferred embodiment thereof, made hereafter by way of a non-limiting example only with reference to the following figures, in which:
Figure 1 shows a plan view of the carabiner of the invention;
Figure 2A shows a sectional view of a detail of the carabiner in figure 1;
Figure 2B shows a sectional view of the detail in figure 2 under load;
Figure 3 shows a perspective view of the detail in figure 2A;
Figure 4 shows a sectional view of a detail of the carabiner of the invention according to a different embodiment.

With reference to the figures, the carabiner according to the invention, indicated as a whole with reference numeral 1, comprises a ring 2 having a first side 3 interrupted by an opening delimited by a first and a second end 10, 12. The opening is closed by a spring closing element 4 which can take an open position to allow the introduction in the carabiner 1 of a rope or a ring of a different device, and a closed position, wherein the closing element 4 closes ring 2 of the carabiner, preventing the escape of said rope or ring of the different device.

In one embodiment, ring 2 has a first and a second side 3, 5 converging and connected by a first and a second loop 6, 7, wherein the first loop 6 has a smaller radius of curvature than the second loop 7.

The first end 10 of the ring 2 comprises a coupling portion 13. The coupling portion 13 is bulb-shaped with the projecting part in a direction transverse to the plane of the carabiner 1. In this way, a hook effect for the rope passing through the carabiner is prevented.

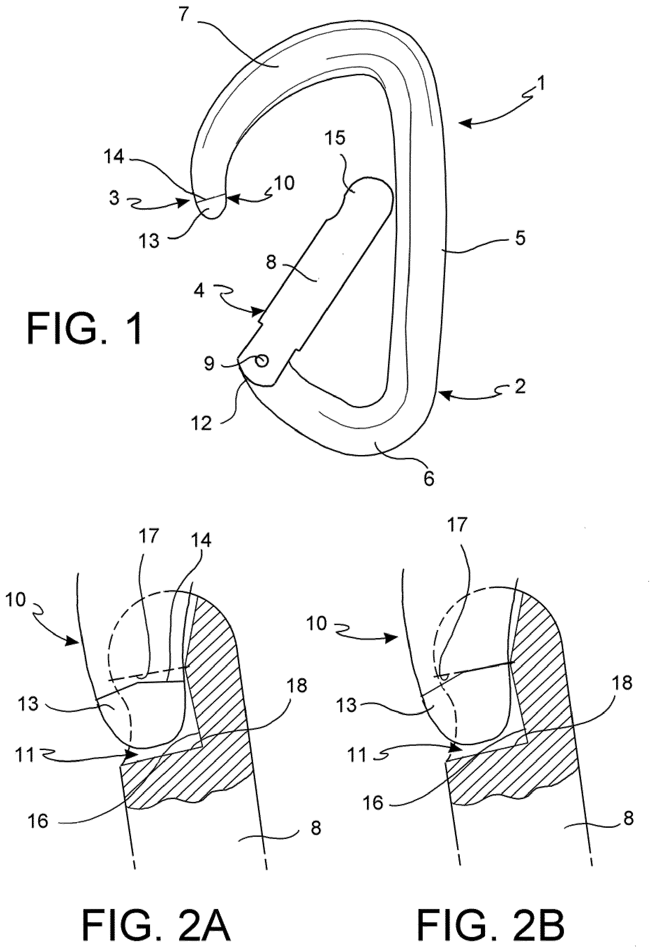

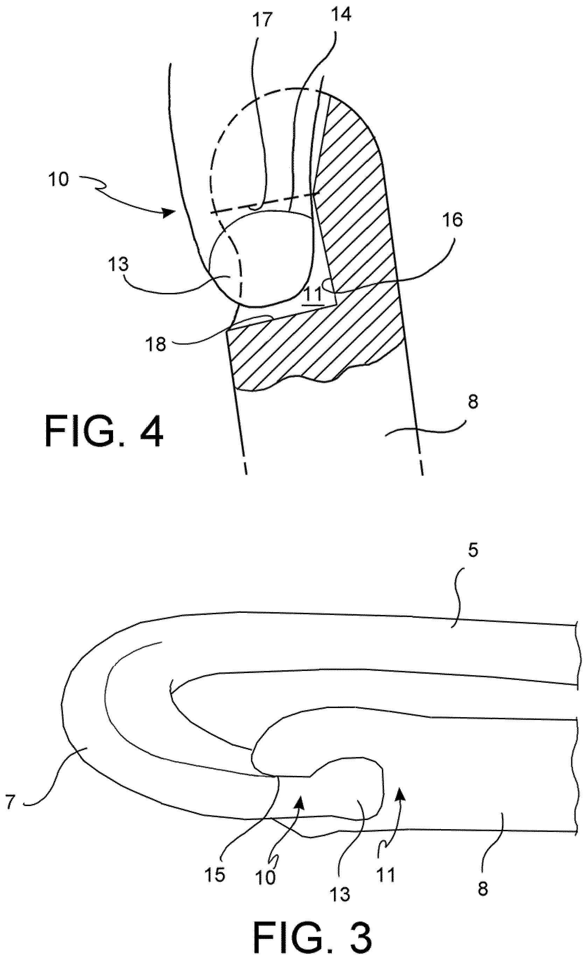

The bulb-shaped coupling portion 13 therefore includes on both sides of the bulb a shoulder 14 having an uneven surface. In particular, in the embodiment in figures 1, 2A and 2B, the surface of the shoulder 14 is convex with a broken line profile, while in the embodiment in figure 4 it is convex with a continuous line profile.

The closing element 4 comprises a tubular body 8, the development of which in length is greater than the extension of the opening of the first side 3. The tubular body 8 is hinged by a hinge 9 at the second end 12 of the first side 3 and has, at the opposite end 10, a seat 11 having such a shape and size as to allow the introduction of the coupling portion 13 of the first end 10 of the side 3 and the stop thereof in abutment inside said seat 11.

As shown in the figures, the seat 11 comprises a vertical groove 15 for the introduction of the first end 10, a lateral abutment surface 16, an upper stop surface 17 and a lower surface 18. The distance between the lower surface 18 and the upper stop surface 17 is greater than the dimensions of the coupling portion 13 of the end 10 of the ring 2, in such a way that, under normal conditions, the shoulder 14 is not in contact with the upper stop surface 17 (figure 2A).

However, according to the extent of the load applied to the carabiner 1, complex deformations in space of the same occur, consisting of translations and rotations of the ring 2 and of the closing element 4.

For this reason, the surfaces that come into contact between the shoulder 14 and the closing element 4 do not remain constant in time, but vary in size and location as a function of the applied load.

With the type of geometries involved, the uneven surface, in particular the convex surface, of the shoulder 14 allows maintaining a stable coupling following the deformation of ring 2 as a "knee effect" coupling occurs between the closing element 4 and the coupling portion 13 of the ring 2.

Therefore, thanks to the convex shape, either broken or continuous, of the surface of the shoulder 14, a stable and resistant coupling is always obtained which prevents the accidental opening of the closing element 4 which can instead happen with the carabiners with "key-lock" system of the prior art.

In the latter, in fact, the surface of the shoulder 14 is substantially flat (straight profile) and must be in condition of parallelism with the surface of the closing element 4 to ensure an optimal coupling; this hardly occurs, irrespective of the applied loads. It is therefore a coupling sensitive to deformations and without the necessary precautions, there can be an accidental opening of the closing element 4.

The carabiner according to the invention therefore achieves the intended object of significantly improving the safety for the user.

The carabiner of the invention is of simple construction, lightweight and cost-effective.

It is clear that the above description is only a particular embodiment of the present invention, and those skilled in the art will be able to make all those modifications necessary for its adaptation to particular conditions, without thereby departing from the protection scope claimed.

## Claims

1. Carabiner (1) comprising a ring (2) having a side (3), interrupted by an opening delimited by a first and a second end (10, 12), wherein said opening is closed by a spring closing element (4) which can take an open position and a closed position, wherein the first end (10) of the ring (2) comprises a bulb-shaped hooking portion (13), with the projecting part in a direction transverse to the plane of the carabiner (1), **characterised in that** said coupling portion (13) on both sides of the bulb comprises a shoulder (14) having an uneven surface.

2. Carabiner (1) according to claim 1, wherein the surface of the shoulder (14) is convex with a broken line or continuous line profile.

3. Carabiner (1) according to claim 1 or 2, wherein the closing element (4) comprises a tubular body (8) comprising a seat (11) having such a shape and size as to allow the introduction of the coupling portion (13) of the first end (10) of the side (3) of the ring (2) and its stop in abutment inside said seat (11).

4. Carabiner (1) according to claim 3, wherein the seat (11) comprises a vertical groove (15) for the introduction of said first end (10) of the side (3) of the ring (2), a lateral abutment surface (16) for the coupling portion (13), an upper stop surface (17) for the shoulder (14) and a lower surface (18).

5. Carabiner (1) according to claim 4, wherein the distance between the lower surface (18) and the upper stop surface (17) is greater than the dimensions of the coupling portion (13), in such a way that, when the carabiner is not under load, the shoulder (14) is not in contact with the upper stop surface (17).
